# EUROPÄISCHE PATENTSCHRIFT

(11) **EP 0 814 013 B1**
(45) Veröffentlichungstag und Bekanntmachung des Hinweises auf die Patenterteilung: **08.09.1999**
(21) Anmeldenummer: 96109966.0
(22) Anmeldetag: 20.06.1996
(51) Int. Cl.: B62D 25/20, B62D 29/02, B32B 21/02

(54) **Wagenkastenboden für ein Lastkraftfahrzeug oder für einen Lastkraftfahrzeuganhänger**
Floor for the superstructure of a load-carrying trailer or motor vehicle
Plancher pour carrosserie de remorque ou véhicule à moteur à marchandises

(43) Veröffentlichungstag der Anmeldung: 29.12.1997
(73) Patentinhaber: HOFA Homann GmbH & Co. KG, 49201 Dissen a.T.W. (DE)
(72) Erfinder: Künnemeyer, Fritz, 32805 Horn-Bad Meinberg (DE); Künnemeyer, Thomas, 32805 Horn-Bad Meinberg (DE)
(74) Vertreter: Mey, Klaus-Peter, Dr.-Ing. Dipl.-Wirtsch.-Ing.

(56) Entgegenhaltungen:
- EP-A- 0 431 734
- DE-U- 7 437 782
- DE-U- 9 203 202
- FR-A- 1 333 153
- US-A- 2 565 251
- US-A- 4 364 984
- US-A- 5 506 026

## Beschreibung

Die Erfindung betrifft einen Wagenkastenaufbau, insbes. für ein Lastkraftfahrzeug oder für einen Kraftfahrzeuganhänger mit einer Wagenkastenlänge von 2 m bis 14 m, welcher Wagenkastenaufbau einen statisch tragenden Rahmen aus Stahlrahmenstäben, einen daran angeschlossenen Wagenkastenboden für die Aufnahme von Transportgut sowie Wand- und Dachbauteile aufweist. Der Ausdruck Lastkraftfahrzeug bezeichnet im Rahmen der Erfindung auch sog. Sattelschlepper und der Begriff Wagenkastenaufbau meint auch die Wagenkastenaufbauten solcher Sattelschlepper. Die Wagenkastenlänge kann, wie angegeben, bis zu 14 m reichen. Im allgemeinen hat ein solcher Wagenkasten eine Breite von etwa 2 m bis etwa 2,55 m. Der Wagenkastenaufbau insgesamt ist nach Maßgabe der normierten Lasten des Lastkraftfahrzeuges bzw. des Lastkraftfahrzeuganhängers, z. B. für 3 t, 5 t, 7 t und mehr ausgelegt, und zwar mit besonderer Verleimung (vgl. DIN 68 705 AW. 100). Der Aufbau der Wand- und Dachbauteile ist im Rahmen der Erfindung beliebig. Das Beladen und Entladen eines solchen Wagenkastenaufbaus erfolgt mit modernen Hilfsmitteln. Das zumeist auf Paletten abgepackte oder in Palettenbehältern befindliche Transportgut muß störungsfrei auf dem Wagenkastenboden verschiebbar sein.

Bei dem aus der Praxis bekannten Wagenkastenaufbau, von dem die Erfindung ausgeht, besteht der Wagenkastenboden aus Sperrholz, z. B. aus Sperrholz in 5 bis 11 Lagen. Der Wagenkastenboden ist aus mehreren Sperrholzplatten, deren Grundriß beachtlich kleiner ist als der Grundriß des Wagenkastenbodens unter Bildung von Fugen zusammengesetzt, sei es durch Schäftung, durch Nut- und Federverbindungen, durch stumpfen Stoß mit Verklammerungselementen oder dergleichen. Diese bekannten Maßnahmen sind in montagetechnischer Hinsicht aufwendig und genügen in funktioneller Hinsicht den Anforderungen häufig nicht. Im Bereich der Fugen kann in die Sperrholzplatten Feuchtigkeit eindringen, sei es von der Unterseite her, sei es aus dem Wagenkastenaufbau heraus. Das gilt auch dann, wenn die einzelnen, zum Wagenkastenboden zusammengefügten Sperrholzplatten eine Kunststoffbeschichtung aufweisen und wenn die Sperrholzplatten durch die Kunststoffbeschichtung vollständig und auch im Bereich der Schnittkanten und der Fugen versiegelt sind. Tatsächlich hat der Wagenkastenboden eines Wagenkastens des beschriebenen Aufbaus und der beschriebenen Zweckbestimmung bei fahrendem und beladenem Lastkraftfahrzeug erheblich dynamische Wechselbiegebeanspruchungen aufzunehmen, die im Bereich der Fugen zu Relativbewegungen zwischen zwei benachbarten Sperrholzplatten führen. Diese Relativbewegung beeinträchtigt die Fugenpassung, im Bereich der Fugen angeordnete Kunststoffschichten erfahren durch Abrieb eine vorzeitige Zerstörung. Das Ergebnis ist, daß in diese und über diese zerstörten Stellen Feuchtigkeit in die Sperrholzplatten eindringt und daß die Sperrholzplatten im Bereich der Fugen stufenbildend quellen. Diese Stufen behindern das Verschieben des Transportgutes. Definiert man als Standzeit eines solchen Wagenkastenbodens aus mehreren Sperrholzplatten die Zeitspanne, in der die Funktion des Wagenkastenbodens durch aufquellende Fingen nicht gestört ist, so ist die Standzeit verbesserungsbedürftig und zeigt der Wagenkastenaufbau insgesamt aus diesem Grunde kein befriedigendes Langzeitverhalten.

Der Erfindung liegt das technische Problem zugrunde, bei einem Wagenkastenaufbau der eingangs beschriebenen Zweckbestimmung die Standzeit des Wagenkastenbodens sowie das Langzeitverhalten des Wagenkastenaufbaus insgesamt beachtlich zu verbessern.

Zur Lösung dieser Aufgabe ist Gegenstand der Erfindung ein Wagenkastenaufbau, insbesondere für ein Lastkraftfahrzeug oder für einen Kraftfahrzeuganhänger mit einer Wagenkastenlänge von 2 m bis 14 m, welcher Wagenkastenaufbau einen statisch tragenden Rahmen aus Stahlrahmenstäben, einen daran angeschlossenen Wagenkastenboden für die Aufnahme von Transportgut sowie Wand- und Dachbauteile aufweist. Gekennzeichnet ist der Wagenkastenaufbau durch die Verwendung von zumindest einer OSB-Holzpartikelplatte, die in zumindest fünf Lagen gestreut und verpresst ist und von Lage zu Lage sich kreuzende, abwechselnd in Längsrichtung sowie in Querrichtung des Wagenkastenaufbaus verlaufende Strands aufweist, wobei jede OSB-Holzpartikelplatte einteilig und nahtlos den Wagenkastenboden bildet, mit der Maßgabe, dass die Strands eine Länge von 80 bis 120 mm eine Breite von 1,5 bis 3 cm sowie eine Dicke von 0,5 bis 0,7 mm aufweisen. OSB-Holzpartikelplatten mehrlagig mit von Lage zu Lage sich kreuzenden Strands herzustellen, ist beispielsweise aus der US-A-4364984 bekannt.

Nach bevorzugter Ausführungsform der Erfindung wird eine weitere Maßnahme verwirklicht, und zwar dahingehend, dass die OSB-Holzpartikelplatte ein spezifisches Gewicht von 600 bis 700 kg/m, vorzugssweise von etwa 650 kg/m aufweist, bei einem Holzanteil von etwa 90 %. Dabei wird mit den für OSB-Holzpartikelplatten üblichen Hölzern und Leimen gearbeitet. Es kann vorteilhaft auch mit sieben Schichten und mehr gearbeitet werden.

OSB steht für Oriented Strands Boards und ist in die deutsche Fachsprache eingegangen. Es handelt sich gleichsam um Spanplatten besonderer Art. Die Späne werden auch im deutschen Sprachgebrauch als Strands bezeichnet. OSB-Holzpartikelplatten zeichnen sich durch hohe Festigkeit aus. Sie werden wie Spanplatten hergestellt. Die Erfindung beruht auf der Erkenntnis, dass OSB-Holzpartikelplatten für die Aufnahme der beschriebenen Wechselbiegebeanspruchungen im Rahmen der erfindungsgemäßen Verwendung überraschend gut geeignet sind, wenn sie als Wagenkastenboden einteilig gestattet sind. Auch extreme Wechselbiegebeanspruchungen beeinträchtigen die Standzeit des Wagenkastenbodens und damit das Langzeitverhalten des Wagenkastenaufbaus im ganzen nicht. Feuchtigkeit kann störend in dem erfindungsgemäßen Wagenkastenboden nicht eindringen. Das beschriebene Verhalten beruht auf der Dimensionierung der Strands und der weiteren vorstehend beschriebenen Auslegung der OSB-Holzpartikelplatte, welche für die Erfindung verwendet wird. Die so verwendeten Holzpartikelplatten sind einteilige Platten einer Länge von bis zu 14 m bei bis zu 2,55 m Breite. Es versteht sich, daß mit entsprechend ausgelegten Anlagen für solche OSB-Holzpartikelplatten gearbeitet werden muß, die jedoch dem Stand der Technik angehören. Allerdings werden im Rahmen der insoweit bekannten Maßnahmen die fertigen OSB-Holzpartikelplatten nach Maßgabe ihrer weiteren Verwendung in Teilplatten aufgeteilt. Erfindungsgemäß bleiben die Platten ungeteilt. Im Rahmen der Erfindung liegt es, den Wagenkastenboden nicht nur aus einer einzigen OSB-Holzpartikelplatte aufzubauen, sondern deren mehrere aufeinanderzulegen. Diese können auch miteinander verklebt sein.

Im einzelnen kann der erfindungsgemäße Wagenkastenaufbau auf verschiedene Art und Weise ausgebildet werden. Für die meisten Anwendungsfälle ist es ausreichend, daß die OSB-Holzpartikelplatte eine Dicke von 15 bis 25 mm, vorzugsweise von etwa 20 mm aufweist. Eine bevorzugte Ausführungsform der Erfindung ist dadurch gekennzeichnet, daß zumindest die transportgutseitige Oberfläche der OSB-Holzpartikelplatte eine Phenolharzbeschichtung, vorzugsweise eine Beschichtung aus phenolharzimprägnierten Papieren, aufweist. Dabei empfiehlt es sich, die Oberfläche der Beschichtung mit einer durch Prägen erzeugten Abbildung eines Drahtsiebes oder eines anderen Musters zu versehen. Die Oberfläche ist auf diese Weise rutschfest eingerichtet, erlaubt jedoch das beschriebene Verschieben des Transportgutes. Nach bevorzugter Ausführungsform der Erfindung ist fernerhin die OSB-Holzwerkstoffplatte beidseitig und auch an den Schnittkanten mit einer Versiegelungsschicht versehen.

Wie eingangs erwähnt ist ein Wagenkastenaufbau, wie ihn die Erfindung definiert, mit einem statisch tragenden Rahmen aus Stahlrahmenstäben versehen. Im Rahmen der Erfindung liegt eine besondere Kombination und Abstimmung der OSB-Holzpartikelplatte, die den Wagenkastenboden bildet, mit diesem Rahmen. Die Erfindung lehrt dazu, daß der statisch tragende Rahmen längslaufende Rahmenholme, stirnseitige Rahmenholme und in Längsrichtung des Rahmens mit Abstand angeordnete Rahmentraversen aufweist und daß die OSB-Holzpartikelplatte als Durchlaufträger mit den Rahmentraversen als Auflager dimensioniert ist. Dabei wird die OSB-Holzpartikelplatte als ein Träger oder Balken mit besonderem der OSB-Holzpartikelplatten entsprechendem Flächenträgheitsmoment betrachtet und das Elastizitätsmodul dieser OSB-Holzpartikelplatte beachtet. Wird die OSB-Holzpartikelplatte für ihre Verwendung als Wagenkastenboden wie vorstehend beschrieben gleichsam als Durchlaufträger eingerichtet, so ist sie optimal für die Aufnahme der Beanspruchungen auslegbar. Je mehr Rahmentraversen dieser Rahmen aufweist, desto dünner kann die OSB-Holzpartikelplatte sein. Wird diese OSB-Holzpartikelplatte zusätzlich auf den stirnseitigen und längsseitigen Rahmenholmen aufgelagert, so bewirkt dieses eine weitere Verbesserung der Gestaltfestigkeit und Stabilität.

Im folgenden wird die Erfindung anhand einer lediglich ein Ausführungsbeispiel darstellenden Zeichnung ausführlicher erläutert. Es zeigen in schematischer Darstellung
- Fig. 1: eine Draufsicht auf einen erfindungsgemäßen Wagenkastenaufbau, wobei jedoch die Wand- und Dachbauteile weggelassen wurden und lediglich der Wagenkastenboden sichtbar ist,
- Fig. 2: in gegenüber der Fig. 1 wesentlich vergrößertem Maßstab den Ausschnitt A aus dem Gegenstand der Fig. 1,
- Fig. 3: in nochmaliger Vergrößerung einen Schnitt BB durch den Gegenstand der Fig. 2,
- Fig. 4: den statisch tragenden Rahmen aus dem Gegenstand der Fig. 1 und
- Fig. 5: einen Längsschnitt durch den Gegenstand der Fig. 4 mit an dem statisch tragenden Rahmen angeschlossener OSB-Holzpartikelplatte.

Der in den Figuren dargestellte Wagenkastenaufbau ist insbes. für ein Lastkraftfahrzeug oder für einen Lastkraftfahrzeuganhänger bestimmt. Die Wagenkastenlänge mag im Ausführungsbeispiel 14 m betragen, bei einer Breite bis etwa 2,55 m. Der Wagenkastenaufbau besitzt einen statisch tragenden Rahmen 1 aus Stahlrahmenstäben, wozu auf die Fig. 5 verwiesen wird. An diesen statisch tragenden Rahmen 1 ist mit geeigneten und üblichen Hilfsmitteln der Wagenkastenboden 2 für die Aufnahme des Transportgutes angeschlossen. Die im übrigen zum Wagenkastenaufbau gehörenden Wand- und Dachbauteile wurden aus Gründen der Übersichtlichkeit nicht gezeichnet.

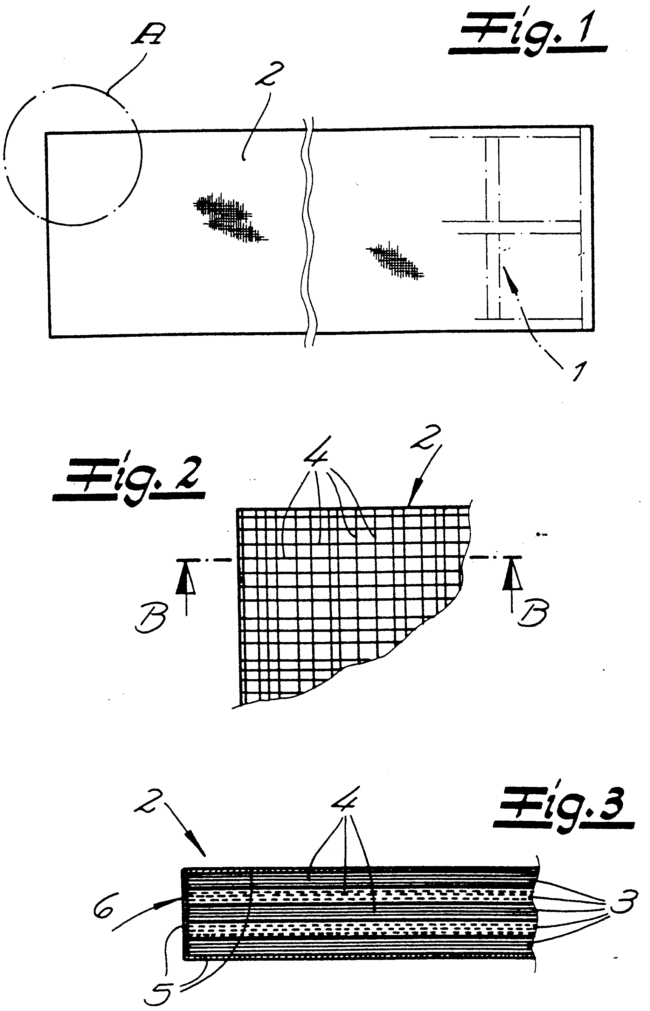

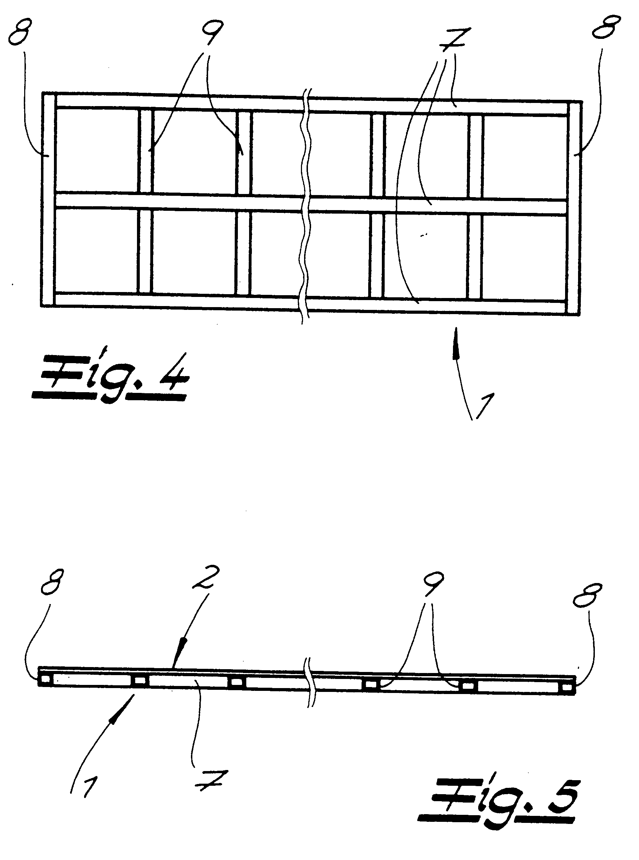

Wesentlich für die Erfindung ist die Verwendung einer OSB-Holzpartikelplatte als Wagenkastenboden 2. Insoweit wird auf die Fig. 1, 2 und 3 verwiesen. Die OSB-Holzpartikelplatte besitzt im Ausführungsbeispiel fünf Lagen 3. Diese fünf Lagen 3 sind separat gestreut, als einheitliche Streugutmatte jedoch zu der OSB-Holzpartikelplatte verpreßt. Man könnte auch mit sechs oder neun solcher Lagen 3 arbeiten. Aus einer vergleichenden Betrachtung der Fig. 2 und 3 entnimmt man, daß die OSB-Holzpartikelplatte von Lage 3 zu Lage 3 sich kreuzende, abwechselnd in Längsrichtung sowie in Querrichtung des Wagenkastens verlaufende Strands 4 aufweist. Diese OSB-Holzpartikelplatte ist als Wagenkastenboden 2 einteilig und nahtlos, wozu auf die Fig. 1 verwiesen wird.

Zur Erfindung gehört die Maßnahme, daß die Strands 4 eine Länge von 80 bis 120 mm, eine Breite von 1,5 bis 3 cm und eine Dicke von 0,5 bis 0,7 mm aufweisen und daß die Dicke der OSB-Holzpartikelplatte 2 nach Maßgabe des Gewichtes des Transportgutes eingerichtet ist. Die OSB-Holzpartikelplatte 2 mag im Ausführungsbeispiel ein spezifisches Gewicht von 600 bis 700 kg/m , vorzugsweise von etwa 650 kg/m aufweisen, bei einem Holzanteil von etwa 90 %. Im Ausführungsbeispiel und für die meisten Anwendungsfälle genügt es, daß die OSB-Holzpartikelplatte 2 eine Dicke von 15 bis 25 mm, vorzugsweise von etwa 20 mm aufweist. Angedeutet wurde in der Fig. 3, daß nicht nur die transportgutseitige Oberfläche des Wagenkastenbodens 2 eine Phenolharzbeschichtung 5, vorzugsweise eine Beschichtung aus phenolharzimprägnierten Papieren, aufweist, sondern daß auch die untere Seite und die in der Fig. 3 angedeutete Schnittseite 6 mit einer solchen Beschichtung 5 versehen ist. Die Oberfläche der Beschichtung trägt eine durch Prägen erzeugte Abbildung eines Drahtsiebes und ist dadurch ausreichend rutschfest, läßt jedoch das Verschieben des Transportgutes zu.

In den Fig. 4 und 5 erkennt man, daß der statisch tragende Rahmen 1 längslaufende Rahmenholme 7, stirnseitige Rahmenholme 8 und in Längsrichtung des Rahmens 1 mit Abstand angeordnete Rahmentraversen 9 aufweist. Dieser statisch tragende Rahmen und der Wagenkastenboden 2 in Form der OSB-Holzpartikelplatte sind nach bevorzugter Ausführungsform zu einer statischen Einheit integriert und die OSB-Holzpartikelplatte 2 ist als Durchlaufträger mit den Rahmentraversen 9 als Auflager dimensioniert. Durch diese Vereinigung können mit verhältnismäßig dünnen OSB-Holzpartikelplatten 2 sehr große Transportgewichte beherrscht werden. Das gilt insbes. dann, wenn die OSB-Holzpartikelplatte zusätzlich auf den längslaufenden und stirnseitigen Rahmenholmen 7 bzw. 8 aufgelagert ist.

## Patentansprüche

1. Wagenkastenaufbau, insbesondere für ein Lastkraftfahrzeug oder für einen Kraftfahrzeuganhänger mit einer Wagenkastenlänge von 2 m bis 14 m, welcher Wagenkastenaufbau einen statisch tragenden Rahmen aus Stahlrahmenstäben, einen daran angeschlossenen Wagenkastenboden für die Aufnahme von Transportgut sowie Wand- und Dachbauteile aufweist, **gekennzeichnet durch** die Verwendung von zumindest einer OSB-Holzpartikelplatte, die in zumindest fünf Lagen gestreut und verpresst ist und von Lage zu Lage sich kreuzende, abwechselnd in Längsrichtung sowie in Querrichtung des Wagenkastenaufbaus verlaufende Strands aufweist, wobei jede OSB-Holzpartikelplatte einteilig und nahtlos den Wagenkastenboden bildet, mit der Maßgabe, das die Strands eine Länge von 80 bis 120 mm eine Breite von 1,5 bis 3 cm sowie eine Dicke von 0,5 bis 0,7 mm aufweisen.

2. Wagenkastenaufbau nach Anspruch 1 mit der Maßgabe, dass die OSB-Holzpartikelplatte ein spezifisches Gewicht von 600 bis 700 kg/m, vorzugsweise von etwa 650 kg/m, bei einem Holzanteil von etwa 90 % aufweist.

3. Wagenkastenaufbau nach einem der Ansprüche 1 oder 2 mit der Maßgabe, daß die OSB-Holzpartikelplatte eine Dicke von 15 bis 25 mm, vorzugsweise von etwa 20 mm, aufweist.

4. Wagenkastenaufbau nach einem der Ansprüche 1 bis 3 mit der Maßgabe, daß zumindest die transportgutseitige Oberfläche der OSB-Holzpartikelplatte eine Phenolharzbeschichtung, vorzugsweise eine Beschichtung aus phenolharzimprägnierten Papieren, aufweist.

5. Wagenkastenaufbau nach Anspruch 4, wobei die Oberfläche der Beschichtung eine durch Prägen erzeugte Abbildung eines Drahtsiebes oder eines anderen Musters aufweist und dadurch rutschfest eingerichtet ist.

6. Wagenkastenaufbau nach einem der Ansprüche 4 oder 5, wobei die OSB-Holzpartikelplatte beidseitig und auch an den Schnittkanten eine Versiegelungsschicht aufweist.

7. Wagenkastenaufbau nach einem der Ansprüche 1 bis 6, wobei der statisch tragende Rahmen längslaufende Rahmenholme, stirnseitige Rahmenholme und in Längsrichtung des Rahmens mit Abstand voneinander angeordnete Rahmentraversen aufweist und wobei die OSB-Holzpartikelplatte als Durchlaufträger mit den Rahmentraversen als Auflager dimensioniert ist.

8. Wagenkastenaufbau nach Anspruch 7, wobei die OSB-Holzpartikelplatte zusätzlich auf den längslaufenden und stirnseitigen Rahmenholmen aufgelagert ist.

## Claims

1. A vehicle body construction, particularly for a lorry or for a vehicle trailer with a body length of 2 m to 14 m, which vehicle body construction has a statically supporting frame made of steel frame bars, a body floor joined thereto to receive goods to be transported, and wall and roof components, characterised by the use of at least one OSB wood particle panel which is spread and pressed in at least five layers and has strands which cross over each other from layer to layer and run alternately in the longitudinal and the transverse direction of the vehicle body construction, each OSB wood particle panel forming the floor of the vehicle body construction in one piece with no seam, with the limitation that the strands have a length of 80 to 120 mm, a width of 1.5 to 3 cm and a thickness of 0.5 to 0.7 mm.

2. A vehicle body construction according to claim 1 with the limitation that the OSB wood particle panel has a density of 600 to 700 kg/m, preferably about 650 kg/m, with a wood content of about 90%.

3. A vehicle body construction according to claim 1 or 2 with the limitation that the OSB wood particle panel has a thickness of 15 to 25 mm, preferably about 20 mm.

4. A vehicle body construction according to one of claims 1 to 3 with the limitation so that at least the surface of the OSB wood particle panel towards the goods to be transported has a phenolic resin coating, preferably a coating of papers impregnated with phenolic resin.

5. A vehicle body construction according to claim 4, wherein the surface of the coating has a representation of a wire screen or other pattern, produced by stamping, and is thereby made non-slip.

6. A vehicle body construction according to claim 4 or 5, wherein the OSB wood particle panel has a sealing layer on both sides and also at the cut edges.

7. A vehicle body construction according to one of claims 1 to 6, wherein the statically supporting frame has longitudinally extending frame spars, end frame spars and frame cross-pieces spaced out in its longitudinal direction, and wherein the OSB wood particle panel is dimensioned as a through support with the frame cross-pieces as bearings.

8. A vehicle body construction according to claim 7, wherein the OSB wood particle panel is additionally mounted on the longitudinally extending and end frame spars.

## Revendications

1. Caisse de véhicule, en particulier pour camion ou remorque de camion, dont la longueur de caisse va de 2 à 14 m, caisse qui comporte un cadre porteur statique, fait de barres d'acier, auquel sont fixés un plancher de caisse recevant les produits à transporter, ainsi que des éléments formant les parois et le toit,
caractérisée en ce que
cette caisse utilise au moins un panneau de particules de bois OSB composée d'au moins cinq couche étalées et comprimées, dont les côtés se croisent d'une couche à la suivante en étant dirigées alternativement selon la direction longitudinale et selon la direction transversale de la caisse du véhicule, chaque panneau de particules formant d'une seule pièce et sans raccord le plancher de la caisse du véhicule, les côtés indiquées ayant une longueur de 80 à 120 mm, une largeur de 1,5 à 3 cm et une épaisseur de 0,5 à 0,7 mm.

2. Caisse de véhicule selon la revendication 1,
caractérisée en ce que
le panneau de particules de bois OSB a une masse spécifique de 600 à 700 kg/m, de préférence 650 kg/m, avec une teneur en bois de 90 % environ.

3. Caisse de véhicule selon la revendication 1 ou 2,
sous réserve que
le panneau de particules de bois OSB a une épaisseur de 15 à 25 mm, de préférence environ 20 mm.

4. Caisse de véhicule selon les revendications 1 à 3,
sous réserve qu'
au moins la surface supérieur du panneau qui est en contact avec les produits transportés porte un revêtement de résine phénolique, constitué de préférence de papier imprégné de résine phénolique.

5. Caisse selon la revendication 4,
caractérisée en ce que
la surface supérieure d'enduction a reçu une empreinte dessinant un grillage ou autre motif lui donnant une résistance au glissement.

6. Caisse selon une des revendications 4 ou 5,
caractérisée en ce que
le panneau de particules porte des deux côtés et également sur ses tranches latérales une couche formant scellement.

7. Caisse selon une des revendications 1 à 6,
caractérisée en ce que
le cadre porteur statique comprend des montants longitudinaux, des montants frontaux et des traverses longitudinales espacées les unes des autres et le panneau est dimensionné en tant que support continu en appui sur les traverses du cadre.

8. Caisse selon la revendication 7,
caractérisée en ce que
le panneau s'appuie en plus sur les montants transversaux et longitudinaux du cadre.
